(19) Europäisches Patentamt
European Patent Office
Office européen des brevets

(11) EP 4 343 009 A1

(12) EUROPEAN PATENT APPLICATION
published in accordance with Art. 153(4) EPC

(43) Date of publication:
**27.03.2024 Bulletin 2024/13**

(21) Application number: **22849031.4**

(22) Date of filing: **08.06.2022**

(51) International Patent Classification (IPC):
***C21D 8/12** (2006.01)* ***C22C 38/00** (2006.01)*
***C22C 38/60** (2006.01)* ***H01F 41/02** (2006.01)*
***H01F 27/245** (2006.01)*

(52) Cooperative Patent Classification (CPC):
**C21D 8/12; C22C 38/00; C22C 38/60; H01F 27/245; H01F 41/02**

(86) International application number:
**PCT/JP2022/023038**

(87) International publication number:
**WO 2023/007952 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.07.2021 JP 2021124863**

(71) Applicant: **JFE Steel Corporation**
**Tokyo 100-0011 (JP)**

(72) Inventors:
- **INOUE, Hirotaka**
  **Tokyo 100-0011 (JP)**
- **OMURA, Takeshi**
  **Tokyo 100-0011 (JP)**
- **SENDA, Kunihiro**
  **Tokyo 100-0011 (JP)**

(74) Representative: **Hoffmann Eitle**
**Patent- und Rechtsanwälte PartmbB**
**Arabellastraße 30**
**81925 München (DE)**

# (54) WOUND CORE AND WOUND CORE MANUFACTURING METHOD

(57) There is provided a wound core with low transformer iron loss and good magnetic characteristics without using two or more types of materials with different magnetic characteristics. A wound core according to the present invention is composed of a grain-oriented electrical steel sheet as a material and has a flat surface portion, a corner portion adjacent to the flat surface portion, a lap portion in the flat surface portion, and a bent portion in the corner portion, and the ratio of the length of the outer circumference to the length of the inner circumference (the length of the outer circumference/the length of the inner circumference) is 1.80 or less when viewed from the side, and the grain-oriented electrical steel sheet has a magnetic flux density B8 in the range of 1.84 T to 1.91 T at a magnetic field strength H of 800 Aim and has a specified iron loss deterioration rate of 1.50 or less under compressive stress.

FIG. 12

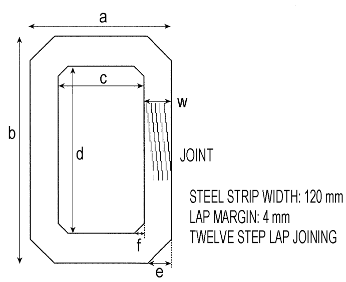


EP 4 343 009 A1

## Description

Technical Field

The present invention relates to a wound core and a method for producing the wound core and more particularly to a wound core for a transformer produced using a grain-oriented electrical steel sheet as a material and a method for producing the wound core.

Background Art

A grain-oriented electrical steel sheet with a crystal structure in which a <001> orientation, which is an easy axis of magnetization of iron, is highly aligned in the rolling direction of the steel sheet is particularly used as an iron core material for a power transformer. Depending on their core structures, transformers are broadly divided into stacked core transformers and wound core transformers. In a stacked core transformer, steel sheets cut into a predetermined shape are stacked to form an iron core. On the other hand, in a wound core transformer, a steel sheet is wound to form an iron core. Although there are various requirements for transformer cores, the most important requirement is low iron loss.

From this perspective, it is important that a grain-oriented electrical steel sheet, which is an iron core material, also has low iron loss characteristics. Furthermore, to reduce the excitation current and the copper loss in a transformer, a high magnetic flux density is also required. The magnetic flux density is evaluated by the magnetic flux density B8 (T) at a magnetizing force of 800 A/m. In general, B8 increases with the degree of accumulation in the Goss orientation. An electrical steel sheet with a high magnetic flux density typically has low hysteresis loss and good iron loss characteristics. To reduce the iron loss, it is important to highly align the crystal orientation of secondary recrystallized grains in a steel sheet with the Goss orientation and to reduce impurities in the steel components.

However, there is a limit to the control of crystal orientation and the reduction of impurities. Thus, a technique of introducing nonuniformity into the surface of a steel sheet by a physical method and refining the width of a magnetic domain to reduce the iron loss, that is, a magnetic domain refining technique has been developed. For example, Patent Literature 1 and Patent Literature 2 describe a heat-resistant magnetic domain refining method of providing a linear groove with a predetermined depth on the surface of a steel sheet. Patent Literature 1 describes a means for forming a groove with a gear roller. Patent Literature 2 describes a means for forming a linear groove on the surface of a steel sheet by etching. These means have the advantage that even when heat treatment, such as strain relief annealing, at the time of forming a wound core does not eliminate the magnetic domain refining effect applied to a steel sheet and that they are applicable to a wound core and the like.

To reduce the transformer iron loss, it is generally considered that the iron loss (material iron loss) of a grain-oriented electrical steel sheet as an iron core material should be reduced. On the other hand, the iron loss in a transformer is often higher than the material iron loss. A value obtained by dividing the iron loss (transformer iron loss) when an electrical steel sheet is used as an iron core of a transformer by the iron loss of a material obtained by an Epstein test or the like is generally called a building factor (BF) or a destruction factor (DF). In a transformer, BF is typically more than 1, and when BF can be reduced, the transformer iron loss can be reduced.

As a general knowledge, magnetic flux concentration in the inner side of an iron core caused by the difference in magnetic path length, generation of in-plane eddy-current loss at a steel sheet joint, an increase in iron loss due to the introduction of strain during processing, and the like are pointed out as factors (BF factors) for which the transformer iron loss in a wound core transformer increases with respect to the material iron loss.

The increase in iron loss due to the magnetic flux concentration in the inner side of an iron core caused by the difference in magnetic path length is described below. In a single-phase wound core illustrated in Fig. 1, a magnetic flux is concentrated in the inner side of the iron core because the magnetic path (iron core inner magnetic path) in the inner side of the iron core (on the inner circumferential side) is shorter than the magnetic path (iron core outer magnetic path) in the outer side of the iron core (on the outer circumferential side). In general, the iron loss of a magnetic material increases nonlinearly and rapidly as the saturation magnetization is approached with respect to the increase in the excitation magnetic flux density. Thus, a magnetic flux concentrated in the inner side of the iron core specifically increases the iron loss in the inner side of the iron core and consequently increases the iron loss of the entire iron core.

The generation of in-plane eddy-current loss at a steel sheet joint is described below. In general, in a wound core for a transformer, a cut portion is provided to insert a winding wire. After the winding wire is inserted from the cut portion into the iron core, steel sheets are provided with a lap portion and are joined together. As illustrated in Fig. 2, in the lapped portion (lap portion) of the steel sheet joint, a magnetic flux is transferred to an adjacent steel sheet in the direction perpendicular to the surface and causes an in-plane eddy current. This locally increases the iron loss.

The introduction of strain during processing also causes an increase in iron loss. Strain introduced by slitting of a steel sheet, bending at the time of processing an iron core, or the like impairs the magnetic characteristics of a steel sheet and increases the transformer iron loss. A wound core is typically subjected to annealing at a temperature above the strain relief temperature, that is, so-called strain relief annealing, after iron core processing.

In view of such an increasing factor of the transformer iron loss, for example, the following proposals have been made as measures to reduce the transformer iron loss.

Patent Literature 3 discloses that an electrical steel sheet with magnetic characteristics poorer than the outer circumferential side is arranged on the inner circumferential side of an iron core with a short magnetic path length, and an electrical steel sheet with magnetic characteristics better than the inner circumferential side is arranged on the outer circumferential side of the iron core with a long magnetic path length, thereby avoiding magnetic flux concentration on the inner circumferential side of the iron core and effectively reducing the transformer iron loss. Patent Literature 4 discloses an iron core design method of combining a plurality of types of electrical steel sheets with different magnetic permeabilities and iron losses to control the magnetic flux concentration and the iron loss deterioration caused by the concentration and reduce the transformer iron loss.

Citation List

Patent Literature

PTL 1: Japanese Examined Patent Application Publication No. 62-53579
PTL 2: Japanese Patent No. 2895670
PTL 3: Japanese Patent No. 5286292
PTL 4: Japanese Unexamined Patent Application Publication No. 2006-185999

Summary of Invention

Technical Problem

As disclosed in Patent Literature 3 and Patent Literature 4, to avoid the magnetic flux concentration in the inner circumferential side of an iron core, different materials for the inner circumferential side and the outer circumferential side of the iron core can be used to efficiently improve transformer characteristics. However, these methods require two types of materials with different magnetic characteristics (iron loss) to be appropriately arranged and therefore complicate the design of a transformer and remarkably reduce the productivity thereof.

An object of the present invention is to provide a wound core with low transformer iron loss and good magnetic characteristics without using two or more types of materials with different magnetic characteristics and a method for producing the wound core.

Solution to Problem

To produce a wound core with low transformer iron loss and good magnetic characteristics, it is necessary to design an iron core to reduce the magnetic flux concentration and to select an iron core material that can reduce the increase in iron loss even when a magnetic flux is concentrated in the inner side of the iron core.

The following three points are required for the iron core design to reduce magnetic flux concentration.

(1) A wound core should have a flat surface portion, a corner portion adjacent to the flat surface portion, a lap portion in the flat surface portion, and a bent portion in the corner portion.
(2) A grain-oriented electrical steel sheet with a magnetic flux density B8 of 1.91 T or less at a magnetic field strength H of 800 A/m should be used as an iron core material.
(3) The ratio of the length of the outer circumference to the length of the inner circumference of an iron core (the length of the outer circumference/the length of the inner circumference) should be 1.80 or less.

Furthermore, the following points are necessary for selecting an iron core material that can suppress the increase in iron loss even when a magnetic flux is concentrated in the inner side of the iron core.

(4) A grain-oriented electrical steel sheet should have a magnetic flux density B8 of 1.84 T or more at a magnetic field strength H of 800 A/m.
(5) A grain-oriented electrical steel sheet should have an iron loss deterioration rate of 1.50 or less under compressive stress as calculated using the following formula:

$$\text{Iron loss deterioration rate under compressive stress} = (\text{iron loss at a compressive stress of 5 MPa})/(\text{iron loss under no compressive stress})$$

wherein the iron loss at a compressive stress of 5 MPa and the iron loss under no compressive stress are the iron loss (W/kg) measured at a frequency of 50 Hz and at a maximum magnetization of 1.7 T, and the iron loss at a compressive stress of 5 MPa is the iron loss measured at a compressive stress of 5 MPa in the rolling direction of an iron core material.

These requirements and the reasons for the requirements are described in detail below.

(1) A wound core should have a flat surface portion, a corner portion adjacent to the flat surface portion, a lap portion in the flat surface portion, and a bent portion in the corner portion.

The wound core is produced by winding a magnetic material, such as a grain-oriented electrical steel sheet. In a typical method, a steel sheet is wound into a cylindrical shape, is then pressed such that a corner portion has a certain curvature, and is formed into a rectangular shape. On the other hand, in another production method, a portion to be a corner portion of a wound core is bent in advance, and the bent steel sheets are lapped to form the wound core. The iron core formed by this method has a bend (bent portion) at a corner portion. The iron core formed by the former method is generally referred to as a "tranco-core", and the iron core formed by the latter method is generally referred to as a "unicore" or a "duocore" depending on the number of steel sheet joints provided. To reduce the magnetic flux concentration, a structure with a bend (bent portion) at a corner portion formed by the latter method is suitable.

The results of experimental investigation of the magnetic flux concentration in iron cores of a tranco-core and a unicore are described below. Iron cores of a single-phase tranco-core and two unicores with the shape illustrated in Fig. 3 were formed by winding a grain-oriented electrical steel sheet with a thickness of 0.23 mm (magnetic flux density B8: 1.89 T, W17/50: 0.86 W/kg), and one tranco-core and one unicore were annealed to relieve strain under the same conditions. A wound core was produced by winding a winding wire 50 turns and performing no-load excitation at a magnetic flux density of 1.5 T and at a frequency of 60 Hz. A single-turn search coil was placed at the position illustrated in Fig. 4 to examine the magnetic flux density distribution in the iron core. Fig. 5 shows the maximum values of the magnetic flux density of each 1/4-thickness iron core from inner winding (inner side) to outer winding (outer side). In both the tranco-core (with strain relief annealing) and the unicore (with strain relief annealing and without strain relief annealing), it can be seen that the inner winding has a higher magnetic flux density and has magnetic flux concentration. A comparison between the tranco-core and the unicore showed that the unicore had lower magnetic flux concentration.

The following is a possible reason for the lower magnetic flux concentration due to the unicore, that is, due to the bent portion provided at the corner portion. In the bent portion of the unicore, deformation twin and the like remain even after strain relief annealing, and the magnetic permeability is locally lower than the other portion. In the presence of a portion with significantly low magnetic permeability, a magnetic flux of a certain level or higher cannot pass through the portion. Thus, even a difference in magnetic path length exists, it rarely causes magnetic flux concentration only in the inner side of the iron core. It is assumed that the inner winding portion of the unicore has lower magnetic flux concentration than the tranco-core without a bent portion of low magnetic permeability.

(2) A grain-oriented electrical steel sheet with a magnetic flux density B8 of 1.91 T or less at a magnetic field strength H of 800 A/m should be used as an iron core material.

The results of experimental investigation of the effects of the magnetic flux density B8 on magnetic flux concentration inside an iron core of a unicore are described below. A single-phase unicore with the shape illustrated in Fig. 3 was produced from a grain-oriented electrical steel sheet with a thickness of 0.23 mm and with a different magnetic flux density B8 shown in Table 1. A winding wire was wound 50 turns, and no-load excitation was performed at a magnetic flux density of 1.5 T and at a frequency of 60 Hz. A single-turn search coil was placed at the position illustrated in Fig. 4 to examine the magnetic flux density distribution in the iron core. Fig. 6 shows the maximum value of the magnetic flux density of each iron core with a 1/4 thickness from inner winding to outer winding in a unicore made of each material (grain-oriented electrical steel sheet). As a result, the magnetic flux concentration tends to decrease as the magnetic flux density B8 of the grain-oriented electrical steel sheet as a material decreases, and the tendency is saturated at 1.91 T or less.

The following is a possible reason why the magnetic flux concentration in the iron core decreases as the magnetic flux density B8 of the grain-oriented electrical steel sheet as a material decreases. A large amount of magnetic flux can typically pass through an iron core material with a high magnetic flux density B8. It is thought that magnetic flux concentration in the inner side of an iron core material with a high magnetic flux density B8 is likely to occur due to the difference in magnetic path length. In contrast, only a certain amount of magnetic flux can pass through an iron core material with a low magnetic flux density B8. Thus, even a difference in magnetic path length exists, it rarely causes magnetic flux concentration only in the inner side of the iron core. In other words, it is assumed that magnetic flux concentration in an iron core is lower in an iron core material with a low magnetic flux density B8 than in an iron core material with a high magnetic flux density B8.

[Table 1]

| | Magnetic flux density B8 (T) |
|---|---|
| 1 | 1.83 |
| 2 | 1.85 |
| 3 | 1.87 |
| 4 | 1.89 |
| 5 | 1.90 |
| 6 | 1.91 |
| 7 | 1.92 |
| 8 | 1.93 |
| 9 | 1.94 |

(3) The ratio of the length of the outer circumference to the length of the inner circumference of an iron core (the length of the outer circumference/the length of the inner circumference) should be 1.80 or less.

The results of experimental investigation of the effects of the difference in magnetic path length between the inner side and the outer side of an iron core on the magnetic flux concentration are described below. An iron core with the shape shown in Fig. 7 and Table 2 and with a different ratio of the length of the inner circumference to the length of the outer circumference was produced from a grain-oriented electrical steel sheet with a thickness of 0.23 mm (magnetic flux density B8: 1.89 T, W17/50: 0.86 W/kg) . A winding wire was wound 50 turns, and no-load excitation was performed at a magnetic flux density of 1.5 T and at a frequency of 60 Hz. A single-turn search coil was placed at the position illustrated in Fig. 4 to examine the magnetic flux density distribution in the iron core. The magnetic flux density increases from outer winding to inner winding. The difference in magnetic flux density between the innermost winding position (position (i)) and the outermost winding position (position (iv)) is defined as magnetic flux concentration in the inner side. Fig. 8 shows the relationship between the ratio of the length of the outer circumference to the length of the inner circumference (the length of the outer circumference/the length of the inner circumference) in each iron core shape and magnetic flux concentration in the inner side of the iron core. As the ratio of the length of the outer circumference to the length of the inner circumference decreases, the difference in magnetic path length between the innerside and the outer side of the iron core decreased, and the magnetic flux concentration in the inner side of the iron core decreased. In particular, when the ratio of the length of the outer circumference to the length of the inner circumference was 1.80 or less, the magnetic flux concentration in the inner side of the iron core was low. In Table 2, the length of the inner circumference was calculated by $2(c + d) + 4f \times (\sqrt{2} - 2)$. The length of the outer circumference was calculated by $2(a + b) + 4e \times (\sqrt{2} - 2)$. a and b were calculated by $a = c + 2w$ and $b = d + 2w$, respectively. The length of the inner circumference and the length of the outer circumference may be calculated from the length of each portion as shown in Table 2, or the length of the inner circumference and the length of the outer circumference may be actually measured.

[Table 2]

| | a (mm) | b (mm) | c (mm) | d (mm) | e (mm) | f (mm) | w (mm) | Length of inner circumference (mm) | Length of outer circumference (mm) | Ratio of length of outer circumference to length of inner circumference (length of outer circumference/length of inner circumference) |
|---|---|---|---|---|---|---|---|---|---|---|
| 1 | 96 | 166 | 70 | 140 | 10 | 3 | 13 | 413 | 501 | 1.21 |
| 2 | 128 | 198 | 70 | 140 | 21 | 3 | 29 | 413 | 603 | 1.46 |
| 3 | 150 | 220 | 70 | 140 | 30 | 3 | 40 | 413 | 670 | 1.62 |
| 4 | 160 | 230 | 70 | 140 | 32 | 3 | 45 | 413 | 705 | 1.71 |
| 5 | 174 | 244 | 70 | 140 | 37 | 3 | 52 | 413 | 749 | 1.81 |
| 6 | 186 | 256 | 70 | 140 | 40 | 3 | 58 | 413 | 790 | 1.91 |
| 7 | 200 | 270 | 70 | 140 | 45 | 3 | 65 | 413 | 835 | 2.02 |
| 8 | 166 | 306 | 140 | 280 | 10 | 5 | 13 | 828 | 921 | 1.11 |
| 9 | 198 | 338 | 140 | 280 | 21 | 5 | 29 | 828 | 1023 | 1.23 |
| 10 | 220 | 360 | 140 | 280 | 30 | 5 | 40 | 828 | 1090 | 1.32 |
| 11 | 244 | 384 | 140 | 280 | 37 | 5 | 52 | 828 | 1169 | 1.41 |
| 12 | 270 | 410 | 140 | 280 | 45 | 5 | 65 | 828 | 1255 | 1.51 |
| 13 | 236 | 376 | 210 | 350 | 10 | 5 | 13 | 1108 | 1201 | 1.08 |
| 14 | 268 | 408 | 210 | 350 | 21 | 5 | 29 | 1108 | 1303 | 1.18 |

Next, the conditions and reasons for the selection of an iron core material that reduces the increase in iron loss when a magnetic flux is concentrated in the inner side of an iron core are described below.

(4) A grain-oriented electrical steel sheet should have a magnetic flux density B8 of 1.84 T or more at a magnetic field strength H of 800 A/m.

In general, the iron loss of a magnetic material increases nonlinearly and rapidly as the saturation magnetization is approached with respect to the increase in the excitation magnetic flux density. Thus, when a magnetic flux is concentrated in the inner side of an iron core and the magnetic flux density is locally increased, as described above, the iron loss is higher than the case of a uniform magnetic flux density distribution. From the perspective of saturation magnetization, as the saturation magnetization increases, the nonlinear increase in iron loss can be reduced, and the increase in iron loss can therefore be reduced. Although saturation magnetization in an electrical steel sheet depends mainly on the Si content, the magnetic flux density B8 of an iron core material is effective for an increase in iron loss in a practical excitation magnetic flux density region. The results of experimental investigation of the effects of the magnetic flux density B8 of an iron core material on the iron loss of a unicore are described below. A single-phase unicore with the shape illustrated in Fig. 3 was produced from a grain-oriented electrical steel sheet with a thickness of 0.23 mm and with a different magnetic flux density B8 shown in Table 3. A winding wire was wound 50 turns, and no-load excitation was performed at a magnetic flux density of 1.5 T and at a frequency of 60 Hz to measure the iron loss. Fig. 9 shows the results. A grain-oriented electrical steel sheet with a magnetic flux density B8 in the range of 1.84 T to 1.91 T as a material had a low iron loss. It is assumed that the iron loss is reduced in the above range by the effect of reducing magnetic flux concentration due to low B8 and the effect of reducing the increase in iron loss due to high B8 described above.

[Table 3]

| | Magnetic flux density B8 (T) |
|---|---|
| 1 | 1.80 |
| 2 | 1.81 |
| 3 | 1.83 |
| 4 | 1.84 |
| 5 | 1.85 |
| 6 | 1.87 |
| 7 | 1.89 |
| 8 | 1.90 |
| 9 | 1.91 |
| 10 | 1.92 |
| 11 | 1.93 |
| 12 | 1.94 |

(5) A grain-oriented electrical steel sheet should have an iron loss deterioration rate of 1.50 or less under compressive stress.

The inner side of an iron core, where the magnetic flux is concentrated and the iron loss increases, is a portion in which strain due to processing is likely to remain. In general, residual strain disturbs the magnetic domain structure of the portion, impairs magnetic permeability, and increases the iron loss of the entire iron core. Furthermore, when strain relief annealing is performed after processing, twinning is present in a rectangular bent portion and, in the same manner as in residual strain, disturbs the magnetic domain structure of the portion, impairs magnetic permeability, and increases the iron loss of the entire iron core. Thus, reducing the increase in iron loss due to residual strain and twinning can reduce the increase in iron loss even when magnetic flux is concentrated in the inner side of an iron core.

As a result of searching for an iron core material that can reduce the increase in iron loss due to residual strain and twinning, it was found that the iron loss in a transformer core can be reduced by selecting a material with an iron loss deterioration rate of 1.50 or less under compressive stress.

The experimental results on which the above preferred ranges are based are described below. A single-phase unicore with the shape illustrated in Fig. 3 was produced from grain-oriented electrical steel sheets A to K with a thickness of 0.23 mm and with different iron loss deterioration rates under compressive stress shown in Table 4. The materials with different iron loss deterioration rates under compressive stress (the grain-oriented electrical steel sheets A to K) were produced by changing the film tension of an insulating film formed on the surface of the electrical steel sheet. The iron loss deterioration rate under compressive stress decreased as the film tension increased. The unicore thus produced was wound with 50 turns of a winding wire and was subjected to no-load excitation at a magnetic flux density of 1.5 T and at a frequency of 60 Hz to measure the iron loss. Fig. 10 shows the relationship between the iron loss deterioration rate of a grain-oriented electrical steel sheet as a material under compressive stress and the transformer iron loss. The transformer iron loss was reduced in a region with an iron loss deterioration rate of 1.50 or less under compressive stress.

Iron loss deterioration due to magnetic domain disturbance caused by compressive stress is correlated with the increase in iron loss due to residual strain and twinning in a wound core. Thus, it is assumed that, even when a magnetic flux is concentrated in the inner side of an iron core, the increase in iron loss can be reduced by selecting an iron core material on the basis of the iron loss deterioration rate under compressive stress.

[Table 4]

| | Iron loss under no compressive stress (W/kg) | Iron loss at compressive stress of 5 MPa (W/kg)*1 | Iron loss deterioration rate under compressive stress*2 |
|---|---|---|---|
| Grain-oriented electrical steel sheet A | 0.79 | 0.91 | 1.15 |
| Grain-oriented electrical steel sheet B | 0.80 | 0.96 | 1.20 |
| Grain-oriented electrical steel sheet C | 0.82 | 1.02 | 1.24 |
| Grain-oriented electrical steel sheet D | 0.83 | 1.08 | 1.30 |
| Grain-oriented electrical steel sheet E | 0.84 | 1.14 | 1.36 |
| Grain-oriented electrical steel sheet F | 0.86 | 1.20 | 1.40 |
| Grain-oriented electrical steel sheet G | 0.85 | 1.23 | 1.45 |
| Grain-oriented electrical steel sheet H | 0.86 | 1.27 | 1.48 |
| Grain-oriented electrical steel sheet I | 0.88 | 1.34 | 1.52 |
| Grain-oriented electrical steel sheet J | 0.89 | 1.38 | 1.55 |
| Grain-oriented electrical steel sheet K | 0.89 | 1.41 | 1.58 |
| *1 Iron loss of a grain-oriented electrical steel sheet in the rolling direction at a compressive stress of 5 MPa<br>*2 Iron loss deterioration rate under compressive stress = (iron loss at compressive stress of 5 MPa (W/kg))/(iron loss under no compressive stress (W/kg))<br>all 1.7 T, 50 Hz | | | |

The present invention has been made on the basis of these findings and has the following constitution.

[1] A wound core comprising a grain-oriented electrical steel sheet as a material, wherein

the wound core has a flat surface portion, a corner portion adjacent to the flat surface portion, a lap portion in the flat surface portion, and a bent portion in the corner portion, and a ratio of a length of an outer circumference to a length of an inner circumference (the length of the outer circumference/the length of the inner circumference) is 1.80 or less when the wound core is viewed from a side, and

the grain-oriented electrical steel sheet has a magnetic flux density B8 in the range of 1.84 T to 1.91 T at a magnetic field strength H of 800 A/m and has an iron loss deterioration rate of 1.50 or less under compressive stress as determined using the following formula:

Iron loss deterioration rate under compressive stress = (iron loss at a compressive stress of 5 MPa)/(iron loss under no compressive stress)

wherein the iron loss at a compressive stress of 5 MPa and the iron loss under no compressive stress are the iron loss (W/kg) measured at a frequency of 50 Hz and at a maximum magnetization of 1.7 T, and the iron loss at a compressive stress of 5 MPa is the iron loss measured at a compressive stress of 5 MPa in a rolling direction of the grain-oriented electrical steel sheet.

[2] The wound core according to [1], wherein the grain-oriented electrical steel sheet is subjected to heat-resistant magnetic domain refining treatment.
[3] A method for producing a wound core that is composed of a grain-oriented electrical steel sheet as a material and has a flat surface portion, a corner portion adjacent to the flat surface portion, a lap portion in the flat surface portion, and a bent portion in the corner portion, wherein

a ratio of a length of an outer circumference to a length of an inner circumference of the wound core when the wound core is viewed from a side (the length of the outer circumference/the length of the inner circumference) is 1.80 or less, and
the grain-oriented electrical steel sheet has a magnetic flux density B8 in the range of 1.84 T to 1.91 T at a magnetic field strength H of 800 A/m and has an iron loss deterioration rate of 1.50 or less under compressive stress as determined using the following formula:

Iron loss deterioration rate under compressive stress = (iron loss at a compressive stress of 5 MPa)/(iron loss under no compressive stress)

wherein the iron loss at a compressive stress of 5 MPa and the iron loss under no compressive stress are the iron loss (W/kg) measured at a frequency of 50 Hz and at a maximum magnetization of 1.7 T, and the iron loss at a compressive stress of 5 MPa is the iron loss measured at a compressive stress of 5 MPa in a rolling direction of the grain-oriented electrical steel sheet.

[4] The method for producing a wound core according to [3], wherein the grain-oriented electrical steel sheet is subjected to heat-resistant magnetic domain refining treatment.

Advantageous Effects of Invention

The present invention can provide a wound core with low transformer iron loss and good magnetic characteristics and a method for producing the wound core. The present invention can provide a wound core with low transformer iron loss and good magnetic characteristics without using two or more types of materials with different magnetic characteristics (iron loss). The present invention can provide a wound core with low iron loss and good magnetic characteristics with high productivity while reducing the complexity of iron core design, such as the arrangement of materials required when two or more types of materials with different magnetic characteristics are used.

Brief Description of Drawings

[Fig. 1] Fig. 1 is a schematic view for explaining a magnetic path of the inner side of an iron core of a wound core and a magnetic path of the outer side of the iron core.
[Fig. 2] Fig. 2 is a schematic view for explaining the transfer of a magnetic flux at a steel sheet joint in the direction perpendicular to the surface of a steel sheet.
[Fig. 3] Fig. 3 is an explanatory view (side view) for explaining the shape of a tranco-core and a unicore produced experimentally.
[Fig. 4] Fig. 4 is an explanatory view for explaining the arrangement of a search coil when the magnetic flux density distribution in an iron core is examined.
[Fig. 5] Fig. 5 is a graph of the results of examining the magnetic flux concentration in an iron core of a tranco-core and a unicore.
[Fig. 6] Fig. 6 is a graph of the results of examining the effects of the magnetic flux density B8 of an iron core material on magnetic flux concentration inside an iron core of a unicore.
[Fig. 7] Fig. 7 is an explanatory view (side view) for explaining the shape of an iron core produced experimentally.
[Fig. 8] Fig. 8 is a graph of the relationship between the ratio of the length of the outer circumference to the length of the inner circumference in each iron core shape and magnetic flux concentration in the inner side of an iron core.
[Fig. 9] Fig. 9 is a graph of the results of examining the effects of the magnetic flux density B8 of an iron core material on the iron loss of a unicore.
[Fig. 10] Fig. 10 is a graph of the relationship between the iron loss deterioration rate of an iron core material under compressive stress and the transformer iron loss.
[Fig. 11] Fig. 11 is an explanatory view (side view) for explaining the shape of a tranco-core produced in an example.
[Fig. 12] Fig. 12 is an explanatory view (side view) for explaining the shape of a unicore produced in an example.
Description of Embodiments

The present invention is described in detail below.

<Wound Core>

As described above, to provide a transformer wound core with low iron loss, the following conditions should be satisfied.

(A) A wound core should have a flat surface portion, a corner portion adjacent to the flat surface portion, a lap portion in the flat surface portion, and a bent portion in the corner portion.
(B) The ratio of the length of the outer circumference to the length of the inner circumference of an iron core is 1.80 or less.

(A) is satisfied by selecting a method of producing a wound core generally called a unicore or duocore type. A known method may be employed as a method for producing a wound core. More specifically, a unicore producing machine manufactured by AEM Cores Pty Ltd can be used to read the design size, thereby shearing and bending a steel sheet in the size according to the design drawing to produce a processed steel sheet one by one, and the processed steel sheets can be stacked to produce a wound core.
The lengths of the outer circumference and the inner circumference of an iron core in the condition (B) refer to the length of the outer circumference and the length of the inner circumference of the iron core, respectively, when the iron core is viewed from the side. Thus, when an iron core is viewed from the side, the length of the outer circumference of the iron core is the length of one turn in the winding direction of a grain-oriented electrical steel sheet (material) constituting a wound core along the outside (outer surface) of the outermost grain-oriented electrical steel sheet, and the length of the inner circumference of the iron core is the length of one turn in the winding direction of a grain-oriented electrical steel sheet constituting the wound core along the inside (inner surface) of the innermost grain-oriented electrical steel sheet. The upper limit of the ratio of the length of the outer circumference to the length of the inner circumference of an iron core should be 1.80. The ratio is preferably 1.70 or less, more preferably 1.60 or less. The lower limit of the ratio is not particularly defined in terms of characteristics and is determined by the relationship between the iron core size and the thickness because the iron core thickness decreases as the ratio approaches 1. For example, the lower limit of the ratio is 1.05.
As long as the requirements (A) and (B) are controlled within the scope of the present invention, there are no particular limitations on the type of steel sheet joint, the iron core size, the bending angle of a bent portion, the number of bent portions, and the like other than (A) and (B).

<Grain-Oriented Electrical Steel Sheet Constituting Wound Core>

As described above, to provide a transformer wound core with low iron loss, the following conditions should be satisfied.

(C) A grain-oriented electrical steel sheet with a magnetic flux density B8 in the range of 1.84 T to 1.91 T at a magnetic field strength H of 800 A/m should be used as an iron core material.

The magnetic characteristics are measured by the Epstein test. The Epstein test is performed by a known method, such as IEC standard or JIS standard. Alternatively, when it is difficult to evaluate the magnetic flux density B8 by the Epstein test, for example, in the case of a non-heat-resistant magnetic domain refined material, the results of a single sheet tester (SST) may be used instead. In the production of a wound core, a representative characteristic of a grain-oriented electrical steel sheet coil should be used for selection in accordance with the preferred range of the magnetic flux density B8. More specifically, a test sample is taken at the front and rear ends of a steel sheet coil and is subjected to the Epstein test to measure the magnetic flux density B8, and the average value thereof is adopted as a representative characteristic. Alternatively, the material may be selected on the basis of a characteristic value (an average value and a guranteed value) of a steel sheet provided by a steel manufacturer. The magnetic flux density B8 is preferably 1.86 T or more.

(D) A grain-oriented electrical steel sheet with an iron loss deterioration rate of 1.50 or less under compressive stress as calculated using the following formula is used as an iron core material.

Iron loss deterioration rate under compressive stress = (iron loss at a compressive stress of 5 MPa)/(iron loss under no compressive stress)

The iron loss at a compressive stress of 5 MPa and the iron loss under no compressive stress defined in the above formula are the iron loss (W/kg) measured with a single sheet tester at a frequency of 50 Hz and at a maximum magnetization of 1.7 T, and the iron loss at a compressive stress of 5 MPa is the iron loss measured at a compressive stress of 5 MPa in the rolling direction of a grain-oriented electrical steel sheet serving as an iron core material. The compressive stress is applied to the compression side at 5 MPa uniaxially in the rolling direction of a steel sheet. The method of applying the compressive stress is, for example, but not limited to, a method of applying stress with a pusher or the like from one side of a steel sheet while fixing the opposite side with a clamp or the like. In such a case, the stress should be uniformly applied in the rolling direction so that the steel sheet does not buckle. To prevent buckling, the steel sheet may be fixed from upper side and from lower side of the sheet in the direction perpendicular to the surface as long as it does not interfere with the measurement. The iron loss under no compressive stress is the iron loss measured without applying the compressive stress. In the present invention, as described above, a grain-oriented electrical steel sheet with an iron loss deterioration rate of 1.50 or less under compressive stress is used as an iron core material. The iron loss deterioration rate under compressive stress is preferably 1.45 or less. The lower limit of the iron loss deterioration rate under compressive stress is, for example, but not limited to, 1.05.

As long as the requirements (C) and (D) are controlled within the scope of the present invention, there are no particular limitations on the characteristics, components, production method, and the like of a grain-oriented electrical steel sheet other than (C) and (D).

Components and a production method of a grain-oriented electrical steel sheet suitable as a material for a wound core according to the present invention are described below.

[Chemical Composition]

In the present invention, a chemical composition of a slab for a grain-oriented electrical steel sheet may be a chemical composition that causes secondary recrystallization. When an inhibitor is used, for example, when an AlN inhibitor is used, appropriate amounts of Al and N may be contained, and when a MnS·MnSe inhibitor is used, appropriate amounts of Mn and Se and/or S may be contained. As a matter of course, both inhibitors may be used in combination. In such a case, the preferred Al, N, S, and Se contents are Al: 0.010% to 0.065% by mass, N: 0.0050% to 0.0120% by mass, S: 0.005% to 0.030% by mass, and Se: 0.005% to 0.030% by mass.

The present invention can also be applied to an inhibitor-free grain-oriented electrical steel sheet with limited Al, N, S, and Se contents. In such a case, the amounts of Al, N, S, and Se are preferably reduced to Al: 100 ppm by mass or less, N: 50 ppm by mass or less, S: 50 ppm by mass or less, and Se: 50 ppm by mass or less.

Base components and optional additive components of the slab for a grain-oriented electrical steel sheet are specifically described below.

C: 0.08% by mass or less

C is added to improve the microstructure of a hot-rolled steel sheet. However, a C content of more than 0.08% by mass makes it difficult to reduce the C content to 50 ppm by mass or less at which magnetic aging does not occur in the production process, so that the C content is preferably 0.08% by mass or less. The C content has no particular lower limit because secondary recrystallization is possible even in a material containing no C. Thus, the C content may be 0% by mass.

Si: 2.0% to 8.0% by mass

Si is an element effective in increasing the electrical resistance of steel and improving iron loss. At a Si content of 2.0% by mass or more, a sufficient iron loss reducing effect is more easily obtained. On the other hand, at a Si content of 8.0% by mass or less, a significant decrease in workability can be suppressed, and a decrease in magnetic flux density can also be easily suppressed. Thus, the Si content preferably ranges from 2.0% to 8.0% by mass.

Mn: 0.005% to 1.000% by mass

Mn is an element necessary for improving hot workability. At a Mn content of 0.005% by mass or more, the effect of addition thereof is easily obtained. On the other hand, at a Mn content of 1.000% by mass or less, the decrease in the magnetic flux density of a product sheet is easily suppressed. Thus, the Mn content preferably ranges from 0.005% to 1.000% by mass.

Cr: 0.02% to 0.20% by mass

Cr is an element that promotes the formation of a dense oxide film at the interface between a forsterite film and a steel substrate. Although an oxide film can be formed without the addition of Cr, the addition of 0.02% by mass or more of Cr is expected to expand a preferred range of other components. At a Cr content of 0.20% by mass or less, an oxide film can be prevented from becoming too thick, and the deterioration of coating peeling resistance can be easily suppressed. Thus, the Cr content preferably ranges from 0.02% to 0.20% by mass.

The slab for a grain-oriented electrical steel sheet preferably contains these components as base components. In addition to these components, the slab may appropriately contain the following elements.

At least one selected from Ni: 0.03% to 1.50% by mass, Sn: 0.010% to 1.500% by mass, Sb: 0.005% to 1.500% by mass, Cu: 0.02% to 0.20% by mass, P: 0.03% to 0.50% by mass, and Mo: 0.005% to 0.100% by mass

Ni is an element useful for improving the microstructure of a hot-rolled steel sheet and improving magnetic characteristics. At a Ni content of 0.03% by mass or more, the effect of improving the magnetic characteristics is more easily obtained. At a Ni content of 1.50% by mass or less, it is possible to suppress secondary recrystallization from becoming unstable, and it is easy to reduce the possibility that the magnetic characteristics of a product sheet deteriorate. Thus, when Ni is contained, the Ni content preferably ranges from 0.03% to 1.50% by mass.

Sn, Sb, Cu, P, and Mo are elements useful for improving the magnetic characteristics, and at a content thereof above their respective lower limits, the effect of improving the magnetic characteristics is more easily obtained. On the other hand, at a content thereof below their respective upper limits, it is easy to reduce the possibility that the development of secondary recrystallized grains is inhibited. Thus, when Sn, Sb, Cu, P, and Mo are contained, each element content is preferably within the above range.

The remainder other than these components is composed of incidental impurities in the production process and Fe.

Next, a production method of a grain-oriented electrical steel sheet suitable as a material for a wound core according to the present invention is described below.

[Heating]

A slab with the chemical composition described above is heated in the usual manner. The heating temperature preferably ranges from 1150°C to 1450°C.

[Hot Rolling]

The heating is followed by hot rolling. After casting, hot rolling may be performed immediately without heating. A thin cast steel may be or may not be hot-rolled. For hot rolling, the rolling temperature in the final rough rolling pass is 900°C or more, and the rolling temperature in the final finish rolling pass is 700°C or more.

[Hot-Rolled Steel Sheet Annealing]

Subsequently, a hot-rolled steel sheet is annealed as required. To highly develop the Goss structure in the product sheet, the annealing temperature of the hot-rolled steel sheet preferably ranges from 800°C to 1100°C. When the annealing temperature of the hot-rolled steel sheet is less than 800°C, the band microstructure in the hot rolling remains, and it is difficult to realize a primary recrystallization texture with a controlled grain size, and the development of secondary recrystallization may be inhibited. On the other hand, when the annealing temperature of the hot-rolled steel sheet is more than 1100°C, the grain size after annealing of the hot-rolled steel sheet becomes too coarse, so that it may be extremely difficult to realize a primary recrystallization texture with a controlled grain size.

[Cold Rolling]

Subsequently, cold rolling is performed once or twice or more with intermediate annealing interposed therebetween. The intermediate annealing temperature preferably ranges from 800°C to 1150°C. The intermediate annealing time preferably ranges from approximately 10 to 100 seconds.

[Decarburization Annealing]

Subsequently, decarburization annealing is performed. In the decarburization annealing, preferably, the annealing temperature ranges from 750°C to 900°C, the oxidizing atmosphere $PH_2O/PH_2$ ranges from 0.25 to 0.60, and the annealing time ranges from approximately 50 to 300 seconds.

[Application of Annealing Separator]

Subsequently, an annealing separator is applied. The annealing separator is preferably composed mainly of MgO and is preferably applied in an amount in the range of approximately 8 to 15 g/m$^2$.

[Finish Annealing]

Subsequently, finish annealing is performed for the purpose of secondary recrystallization and the formation of a forsterite film. The annealing temperature is preferably 1100°C or more, and the annealing time is preferably 30 minutes or more.

[Flattening Treatment and Insulating Coating]

Subsequently, flattening treatment (flattening annealing) and insulating coating are performed. It is also possible to perform flattening treatment to correct the shape by the application and baking of insulating coating at the time of applying the insulating coating. The flattening annealing is preferably performed at an annealing temperature in the range of 750°C to 950°C for an annealing time in the range of approximately 10 to 200 seconds. In the present invention, the insulating coating can be applied to the surface of a steel sheet before or after the flattening annealing. The term "insulating coating", as used herein, refers to coating (tension coating) that applies tension to a steel sheet to reduce iron loss. The tension coating may be inorganic coating containing silica, ceramic coating by a physical vapor deposition method or a chemical vapor deposition method, or the like.

In general, the iron loss deterioration rate under compressive stress decreases as the tensile strength of a surface film (a forsterite film and insulating coating) applied to a steel sheet increases. Although the thickness of tension coating may be increased to increase film tension, the lamination factor may deteriorate. To obtain high tension without deterioration of the lamination factor, in an inorganic coating containing silica, the baking temperature may be increased to promote glass crystallization. The application of a film with a low thermal expansion coefficient, such as ceramic coating, is also effective in obtaining high tension.

[Magnetic Domain Refining Treatment]

To reduce the iron loss of a steel sheet, magnetic domain refining treatment is preferably performed. The magnetic domain refining technique is a technique of introducing nonuniformity into the surface of a steel sheet by a physical method and refining the width of a magnetic domain to reduce the iron loss. The magnetic domain refining technique is broadly divided into heat-resistant magnetic domain refining in which the effect is not lost in strain relief annealing and non-heat-resistant magnetic domain refining in which the effect is reduced by strain relief annealing. In the present invention, it can be applied to any of a steel sheet not subjected to magnetic domain refining treatment, a steel sheet subjected to heat-resistant magnetic domain refining treatment, and a steel sheet subjected to non-heat-resistant magnetic domain refining treatment.

Among them, a steel sheet subjected to heat-resistant magnetic domain refining treatment is more preferred than a steel sheet subjected to non-heat-resistant magnetic domain refining treatment. The non-heat-resistant magnetic domain refining treatment is typically a treatment of irradiating a steel sheet after secondary recrystallization with a high-energy beam (a laser or the like) to introduce a high dislocation density region into a steel sheet surface layer and form a stress field associated therewith, thereby performing magnetic domain refining. Compressive stress applied to a non-heat-resistant magnetic domain refined material (a steel sheet subjected to non-heat-resistant magnetic domain refining treatment) disturbs the stress field due to energy beam irradiation, reduces the magnetic domain refining effect, and increases the iron loss due to compressive stress. Thus, a steel sheet subjected to heat-resistant magnetic domain refining treatment is preferred. The method of heat-resistant magnetic domain refining treatment may be a known technique of providing a linear groove of a predetermined depth on the surface of a steel sheet.

EXAMPLES

The present invention is more specifically described in the following examples. The examples are preferred examples of the present invention, and the present invention is not limited to these examples. The embodiments of the present invention can be appropriately modified within the scope of the gist of the present invention, and all of them are included in the technical scope of the present invention.

[Example 1]

A single-phase tranco-core and a single-phase unicore with an iron core shape shown in Fig. 11 and Table 5 and in Fig. 12 and Table 6 were produced from a grain-oriented electrical steel sheet, which is an iron core material, shown in Table 7. In conditions 1 to 41, after forming, strain relief annealing was performed at 800°C for 2 hours to remove strain, and after annealing, the iron core was unwound from the joint, and a 50-turn winding coil was inserted. In the conditions 42 to 47, the winding coil was inserted without strain relief annealing. The transformer iron loss was measured at an excitation magnetic flux density (Bm) of 1.5 T and at a frequency (f) of 60 Hz. Under the same conditions, an Epstein test result of an iron core material (in the case of non-heat-resistant magnetic domain refining, a single-sheet magnetic measurement result) was taken as material iron loss, and the iron loss increase rate BF in transformer iron loss with respect to the material iron loss was determined. In Table 5 (tranco-core), the length of the inner circumference was calculated by $2(c + d) - 8f \times (1 - \pi \times 90 \text{ (degrees)}/360 \text{ (degrees)})$. The length of the outer circumference was calculated by $2(a + b) - 8e \times (1 - \pi \times 90 \text{ (degrees)}/360 \text{ (degrees)})$. a and b were calculated by $a = c + 2w$ and $b = d + 2w$, respectively. The length of the inner circumference and the length of the outer circumference of a unicore in Table 6 were calculated in the same manner as in Table 2.

[Table 5]

| | a (mm) | b (mm) | c (mm) | d (mm) | e (mm) | f (mm) | w (mm) | Length of inner circumference (mm) | Length of outer circumference (mm) | Ratio of length of outer circumference to length of inner circumference (length of outer circumference/length of inner circumference) |
|---|---|---|---|---|---|---|---|---|---|---|
| Tranco-core A | 160 | 230 | 90 | 160 | 27 | 3 | 35 | 495 | 734 | 1.48 |
| Tranco-core B | 186 | 256 | 90 | 160 | 38 | 3 | 48 | 495 | 819 | 1.65 |
| Tranco-core C | 224 | 294 | 90 | 160 | 53 | 3 | 67 | 495 | 945 | 1.91 |

[Table 6]

| | a (mm) | b (mm) | c (mm) | d (mm) | e (mm) | f (mm) | w (mm) | Length of inner circumference (mm) | Length of outer circumference (mm) | Ratio of length of outer circumference to length of inner circumference (length of outer circumference/ length of inner circumference) |
|---|---|---|---|---|---|---|---|---|---|---|
| Unicore A | 160 | 230 | 90 | 160 | 28 | 4 | 35 | 491 | 714 | 1.46 |
| Unicore B | 186 | 256 | 90 | 160 | 40 | 4 | 48 | 491 | 790 | 1.61 |
| Unicore C | 224 | 294 | 90 | 160 | 57 | 4 | 67 | 491 | 902 | 1.84 |
| Unicore D | 296 | 456 | 160 | 320 | 55 | 5 | 68 | 948 | 1375 | 1.45 |
| Unicore E | 350 | 510 | 160 | 320 | 75 | 5 | 95 | 948 | 1544 | 1.63 |
| Unicore F | 400 | 540 | 160 | 300 | 100 | 5 | 120 | 908 | 1646 | 1.81 |

Table 7 shows the results. It was found that the examples and optimal examples of the present invention have better BF, lower transformer iron loss, and much better transformer characteristics than comparative examples. In particular, the optimal examples using a heat-resistant magnetic domain refined material had particularly low transformer iron loss.

[Table 7]

| Condition | Wound core | | | Iron core material (grain-oriented electrical steel sheet) | | | Excitation conditions Bm: 1.5T, f: 60Hz | | | Notes |
|---|---|---|---|---|---|---|---|---|---|---|
| | Strain relief annealing | Iron core shape | Ratio of length of outer circumference to length of inner circumference of iron core | Magnetic flux density B8 (T) | Iron loss deterioration rate under compressive stress | Magnetic domain refining | Material iron loss (W/kg) | Transformer iron loss (W/kg) | BF | |
| 1 | | Tranco-core A | 1.48 | 1.90 | 1.23 | No | 0.79 | 1.04 | 1.32 | Comparative example |
| 2 | | Tranco-core A | 1.48 | 1.88 | 1.25 | Heat-resistant magnetic domain refining | 0.72 | 0.94 | 1.30 | Comparative example |
| 3 | | Tranco-core B | 1.65 | 1.90 | 1.23 | No | 0.79 | 1.06 | 1.34 | Comparative example |
| 4 | | Tranco-core B | 1.65 | 1.88 | 1.25 | Heat-resistant magnetic domain refining | 0.72 | 0.97 | 1.35 | Comparative example |
| 5 | | Tranco-core C | 1.91 | 1.90 | 1.23 | No | 0.79 | 1.12 | 1.42 | Comparative example |
| 6 | | Tranco-core C | 1.91 | 1.88 | 1.25 | Heat-resistant magnetic domain refining | 0.72 | 1.03 | 1.43 | Comparative example |
| 7 | | Unicore A | 1.46 | 1.90 | 1.23 | No | 0.79 | 0.85 | 1.08 | Example |
| 8 | | Unicore A | 1.46 | 1.88 | 1.25 | Heat-resistant magnetic domain refining | 0.72 | 0.76 | 1.06 | Optimal example |

(continued)

| Condition | Wound core | | | Iron core material (grain-oriented electrical steel sheet) | | | Excitation conditions Bm: 1.5T, f: 60Hz | | | Notes |
|---|---|---|---|---|---|---|---|---|---|---|
| | Strain relief annealing | Iron core shape | Ratio of length of outer circumference to length of inner circumference of iron core | Magnetic flux density B8 (T) | Iron loss deterioration rate under compressive stress | Magnetic domain refining | Material iron loss (W/kg) | Transformer iron loss (W/kg) | BF | |
| 9 | | Unicore B | 1.61 | 1.90 | 1.23 | No | 0.79 | 0.88 | 1.12 | Example |
| 10 | | Unicore B | 1.61 | 1.88 | 1.25 | Heat-resistant magnetic domain refining | 0.72 | 0.80 | 1.11 | Example |
| 11 | | Unicore C | 1.84 | 1.90 | 1.23 | No | 0.79 | 1.02 | 1.29 | Comparative example |
| 12 | | Unicore C | 1.84 | 1.88 | 1.25 | Heat-resistant magnetic domain refining | 0.72 | 0.93 | 1.29 | Comparative example |
| 13 | | Unicore D | 1.45 | 1.90 | 1.23 | No | 0.79 | 0.85 | 1.07 | Example |
| 14 | | Unicore D | 1.45 | 1.88 | 1.25 | Heat-resistant magnetic domain refining | 0.72 | 0.76 | 1.06 | Optimal example |
| 15 | | Unicore E | 1.63 | 1.90 | 1.23 | No | 0.79 | 0.87 | 1.10 | Example |

(continued)

| Condition | Wound core | | | Iron core material (grain-oriented electrical steel sheet) | | | Excitation conditions Bm: 1.5T, f: 60Hz | | | Notes |
|---|---|---|---|---|---|---|---|---|---|---|
| | Strain relief annealing | Iron core shape | Ratio of length of outer circumference to length of inner circumference of iron core | Magnetic flux density B8 (T) | Iron loss deterioration rate under compressive stress | Magnetic domain refining | Material iron loss (W/kg) | Transformer iron loss (W/kg) | BF | |
| 16 | | Unicore E | 1.63 | 1.88 | 1.25 | Heat-resistant magnetic domain refining | 0.72 | 0.78 | 1.09 | Optimal example |
| 17 | | Unicore F | 1.81 | 1.90 | 1.23 | No | 0.79 | 1.01 | 1.28 | Comparative example |
| 18 | | Unicore F | 1.81 | 1.88 | 1.25 | Heat-resistant magnetic domain refining | 0.72 | 0.92 | 1.28 | Comparative example |
| 19 | | Unicore A | 1.46 | 1.88 | 1.41 | Heat-resistant magnetic domain refining | 0.74 | 0.84 | 1.13 | Optimal example |
| 20 | | Unicore A | 1.46 | 1.88 | 1.47 | Heat-resistant magnetic domain refining | 0.76 | 0.85 | 1.12 | Optimal example |
| 21 | | Unicore A | 1.46 | 1.88 | 1.54 | Heat-resistant magnetic domain refining | 0.77 | 1.03 | 1.34 | Comparative example |

(continued)

| Condition | Wound core | | | Iron core material (grain-oriented electrical steel sheet) | | | Excitation conditions Bm: 1.5T, f: 60Hz | | | Notes |
|---|---|---|---|---|---|---|---|---|---|---|
| | Strain relief annealing | Iron core shape | Ratio of length of outer circumference to length of inner circumference of iron core | Magnetic flux density B8 (T) | Iron loss deterioration rate under compressive stress | Magnetic domain refining | Material iron loss (W/kg) | Transformer iron loss (W/kg) | BF | |
| 22 | Yes | Unicore A | 1.46 | 1.88 | <u>1.62</u> | Heat-resistant magnetic domain refining | 0.81 | 1.09 | 1.34 | Comparative example |
| 23 | | Unicore B | 1.61 | 1.88 | 1.41 | Heat-resistant magnetic domain refining | 0.74 | 0.82 | 1.11 | Optimal example |
| 24 | | Unicore B | 1.61 | 1.88 | 1.47 | Heat-resistant magnetic domain refining | 0.76 | 0.84 | 1.11 | Optimal example |
| 25 | | Unicore B | 1.61 | 1.88 | <u>1.54</u> | Heat-resistant magnetic domain refining | 0.77 | 1.06 | 1.38 | Comparative example |
| 26 | | Unicore B | 1.61 | 1.88 | <u>1.62</u> | Heat-resistant magnetic domain refining | 0.81 | 1.11 | 1.37 | Comparative example |

(continued)

| Condition | Wound core | | | Iron core material (grain-oriented electrical steel sheet) | | | Excitation conditions Bm: 1.5T, f: 60Hz | | | Notes |
|---|---|---|---|---|---|---|---|---|---|---|
| | Strain relief annealing | Iron core shape | Ratio of length of outer circumference to length of inner circumference of iron core | Magnetic flux density B8 (T) | Iron loss deterioration rate under compressive stress | Magnetic domain refining | Material iron loss (W/kg) | Transformer iron loss (W/kg) | BF | |
| 27 | | Unicore C | 1.84 | 1.88 | 1.47 | Heat-resistant magnetic domain refining | 0.76 | 1.03 | 1.35 | Comparative example |
| 28 | | Unicore C | 1.84 | 1.88 | 1.54 | Heat-resistant magnetic domain refining | 0.77 | 1.08 | 1.40 | Comparative example |
| 29 | | Unicore A | 1.46 | 1.94 | 1.25 | No | 0.76 | 0.97 | 1.27 | Comparative example |
| 30 | | Unicore A | 1.46 | 1.92 | 1.24 | No | 0.77 | 0.97 | 1.26 | Comparative example |
| 31 | | Unicore A | 1.46 | 1.91 | 1.24 | No | 0.78 | 0.82 | 1.05 | Example |
| 32 | | Unicore A | 1.46 | 1.88 | 1.23 | No | 0.82 | 0.85 | 1.04 | Example |
| 33 | | Unicore A | 1.46 | 1.86 | 1.22 | No | 0.85 | 0.88 | 1.04 | Example |
| 34 | | Unicore A | 1.46 | 1.84 | 1.22 | No | 0.88 | 0.91 | 1.03 | Example |
| 35 | | Unicore A | 1.46 | 1.83 | 1.22 | No | 0.94 | 1.20 | 1.28 | Comparative example |

(continued)

| Condition | Wound core | | | Iron core material (grain-oriented electrical steel sheet) | | | Excitation conditions Bm: 1.5T, f: 60Hz | | | Notes |
|---|---|---|---|---|---|---|---|---|---|---|
| | Strain relief annealing | Iron core shape | Ratio of length of outer circumference to length of inner circumference of iron core | Magnetic flux density B8 (T) | Iron loss deterioration rate under compressive stress | Magnetic domain refining | Material iron loss (W/kg) | Transformer iron loss (W/kg) | BF | |
| 36 | | Unicore A | 1.46 | 1.92 | 1.28 | Heat-resistant magnetic domain refining | 0.69 | 0.93 | 1.35 | Comparative example |
| 37 | | Unicore A | 1.46 | 1.90 | 1.26 | Heat-resistant magnetic domain refining | 0.70 | 0.74 | 1.05 | Optimal example |
| 38 | | Unicore A | 1.46 | 1.86 | 1.24 | Heat-resistant magnetic domain refining | 0.75 | 0.78 | 1.04 | Optimal example |
| 39 | | Unicore A | 1.46 | 1.92 | 1.43 | Heat-resistant magnetic domain refining | 0.73 | 1.00 | 1.37 | Comparative example |
| 40 | | Unicore A | 1.46 | 1.92 | 1.55 | Heat-resistant magnetic domain refining | 0.75 | 1.07 | 1.42 | Comparative example |

(continued)

| Condition | Wound core | | | Iron core material (grain-oriented electrical steel sheet) | | | Excitation conditions Bm: 1.5T, f: 60Hz | | | Notes |
|---|---|---|---|---|---|---|---|---|---|---|
| | Strain relief annealing | Iron core shape | Ratio of length of outer circumference to length of inner circumference of iron core | Magnetic flux density B8 (T) | Iron loss deterioration rate under compressive stress | Magnetic domain refining | Material iron loss (W/kg) | Transformer iron loss (W/kg) | BF | |
| 41 | | Unicore A | 1.46 | <u>1.92</u> | <u>1.62</u> | Heat-resistant magnetic domain refining | 0.79 | 1.15 | 1.46 | Comparative example |

(continued)

| Condition | Wound core | | | Iron core material (grain-oriented electrical steel sheet) | | | Excitation conditions Bm: 1.5T, f: 60Hz | | | Notes |
|---|---|---|---|---|---|---|---|---|---|---|
| | Strain relief annealing | Iron core shape | Ratio of length of outer circumference to length of inner circumference of iron core | Magnetic flux density B8 (T) | Iron loss deterioration rate under compressive stress | Magnetic domain refining | Material iron loss (W/kg) | Transformer iron loss (W/kg) | BF | |
| 42 | No | Unicore A | 1.46 | 1.90 | 1.23 | No | 0.79 | 0.88 | 1.11 | Example |
| 43 | | Unicore A | 1.46 | 1.88 | 1.25 | Heat-resistant magnetic domain refining | 0.72 | 0.78 | 1.08 | Optimal example |
| 44 | | Unicore A | 1.46 | 1.91 | 1.42 | Non-heat-resistant magnetic domain refining | 0.69 | 0.79 | 1.15 | Example |
| 45 | | Unicore A | 1.46 | 1.90 | 1.38 | No | 0.80 | 0.88 | 1.10 | Example |
| 46 | | Unicore A | 1.46 | 1.88 | 1.41 | Heat-resistant magnetic domain refining | 0.74 | 0.84 | 1.14 | Optimal example |
| 47 | | Unicore A | 1.46 | 1.91 | <u>1.54</u> | Non-heat-resistant magnetic domain refining | 0.73 | 1.00 | 1.37 | Comparative example |

* The underline indicates that it is outside the scope of the present invention.

## Claims

1. A wound core comprising a grain-oriented electrical steel sheet as a material, wherein

   the wound core has a flat surface portion, a corner portion adjacent to the flat surface portion, a lap portion in the flat surface portion, and a bent portion in the corner portion, and a ratio of a length of an outer circumference to a length of an inner circumference (the length of the outer circumference/the length of the inner circumference) is 1.80 or less when the wound core is viewed from a side, and
   the grain-oriented electrical steel sheet has a magnetic flux density B8 in the range of 1.84 T to 1.91 T at a magnetic field strength H of 800 Aim and has an iron loss deterioration rate of 1.50 or less under compressive stress as determined using the following formula:

   Iron loss deterioration rate under compressive stress = (iron loss at a compressive stress of 5 MPa)/(iron loss under no compressive stress)

   wherein the iron loss at a compressive stress of 5 MPa and the iron loss under no compressive stress are the iron loss (W/kg) measured at a frequency of 50 Hz and at a maximum magnetization of 1.7 T, and the iron loss at a compressive stress of 5 MPa is the iron loss measured at a compressive stress of 5 MPa in a rolling direction of the grain-oriented electrical steel sheet.

2. The wound core according to Claim 1, wherein the grain-oriented electrical steel sheet is subjected to heat-resistant magnetic domain refining treatment.

3. A method for producing a wound core that is composed of a grain-oriented electrical steel sheet as a material and has a flat surface portion, a corner portion adjacent to the flat surface portion, a lap portion in the flat surface portion, and a bent portion in the corner portion, wherein

   a ratio of a length of an outer circumference to a length of an inner circumference of the wound core when the wound core is viewed from a side (the length of the outer circumference/the length of the inner circumference) is 1.80 or less, and
   the grain-oriented electrical steel sheet has a magnetic flux density B8 in the range of 1.84 T to 1.91 T at a magnetic field strength H of 800 Aim and has an iron loss deterioration rate of 1.50 or less under compressive stress as determined using the following formula:

   Iron loss deterioration rate under compressive stress = (iron loss at a compressive stress of 5 MPa)/(iron loss under no compressive stress)

   wherein the iron loss at a compressive stress of 5 MPa and the iron loss under no compressive stress are the iron loss (W/kg) measured at a frequency of 50 Hz and at a maximum magnetization of 1.7 T, and the iron loss at a compressive stress of 5 MPa is the iron loss measured at a compressive stress of 5 MPa in a rolling direction of the grain-oriented electrical steel sheet.

4. The method for producing a wound core according to Claim 3, wherein the grain-oriented electrical steel sheet is subjected to heat-resistant magnetic domain refining treatment.

FIG. 1

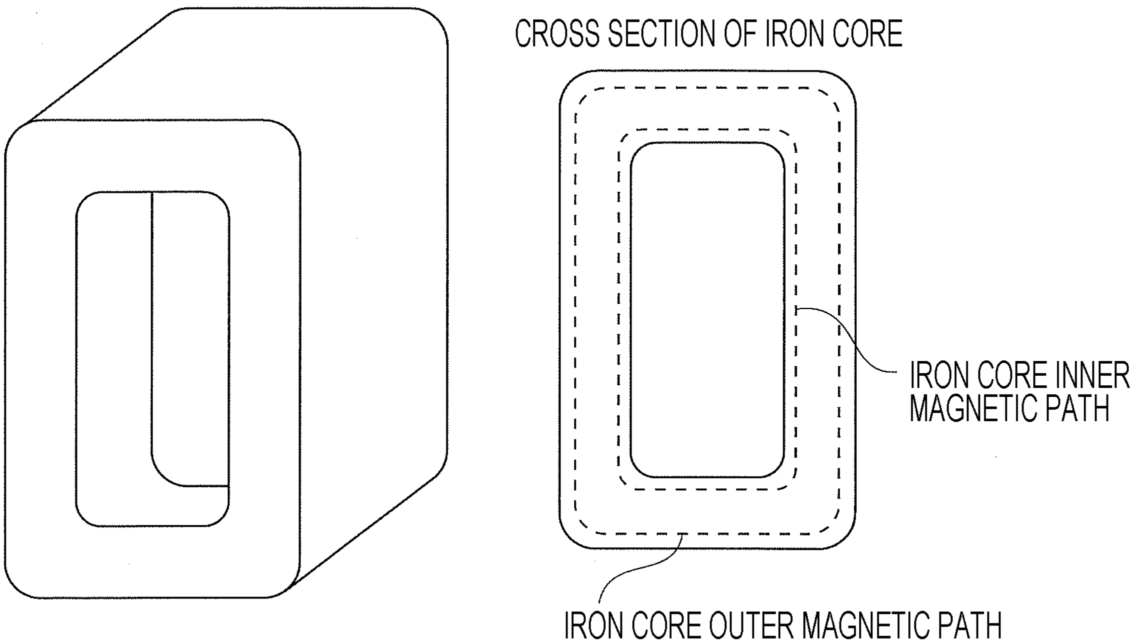
CROSS SECTION OF IRON CORE
IRON CORE INNER MAGNETIC PATH
IRON CORE OUTER MAGNETIC PATH

FIG. 2

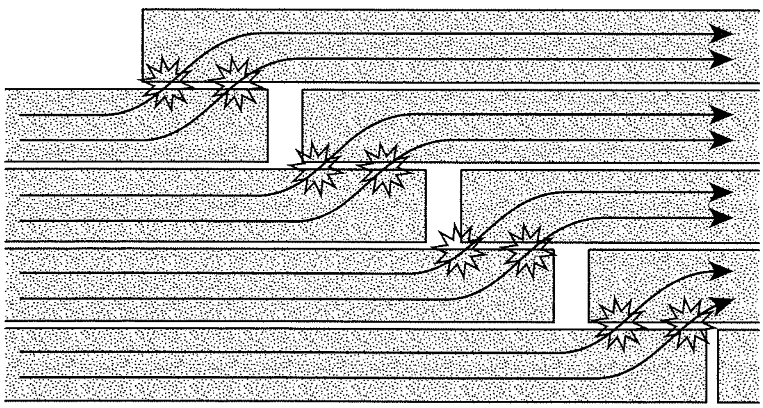

FIG. 3

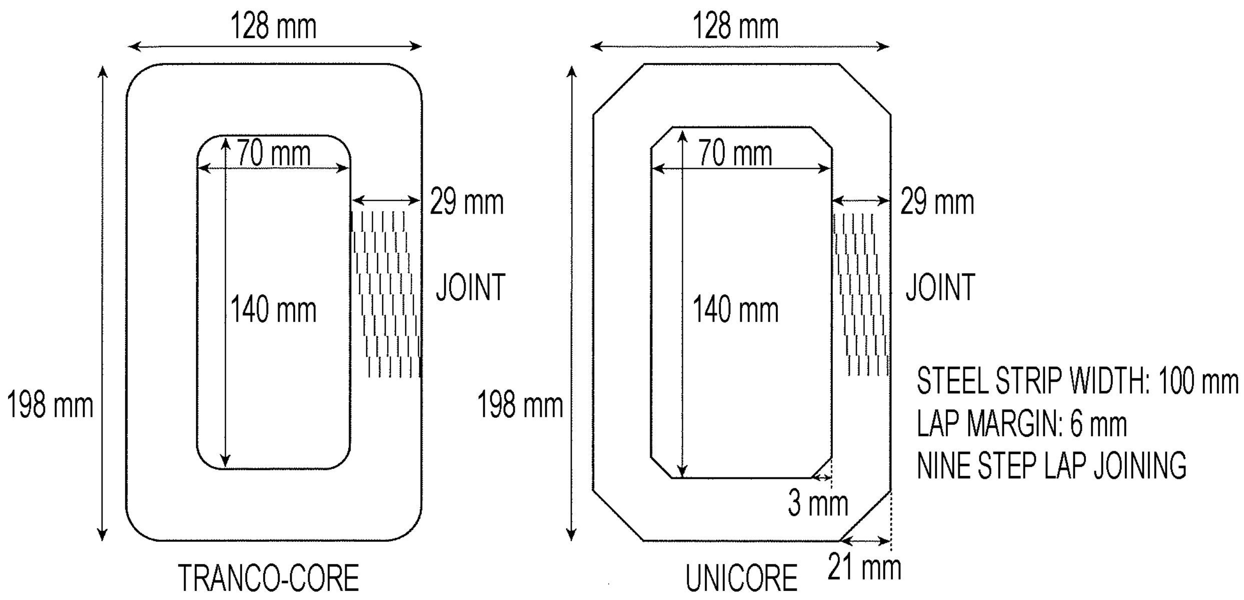
128 mm
70 mm
29 mm
JOINT
140 mm
198 mm
TRANCO-CORE
128 mm
70 mm
29 mm
JOINT
140 mm
198 mm
STEEL STRIP WIDTH: 100 mm
LAP MARGIN: 6 mm
NINE STEP LAP JOINING
3 mm
21 mm
UNICORE

FIG. 4

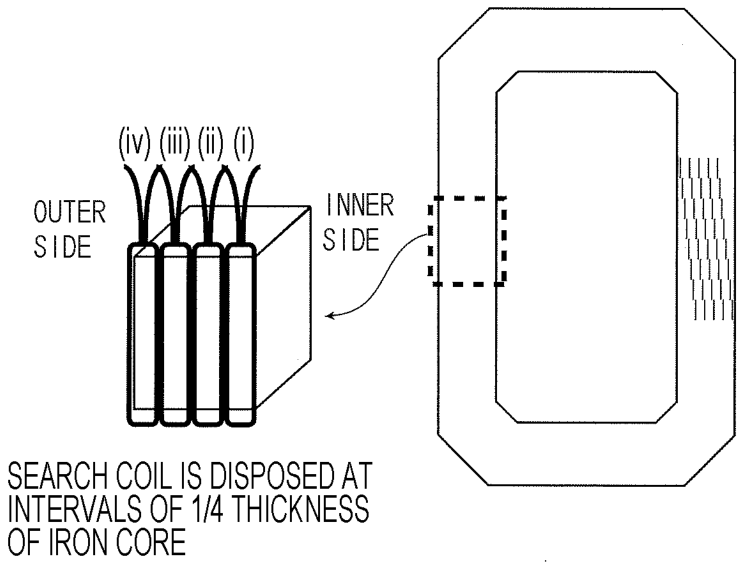
(iv) (iii) (ii) (i)
OUTER SIDE
INNER SIDE
SEARCH COIL IS DISPOSED AT INTERVALS OF 1/4 THICKNESS OF IRON CORE

FIG. 5

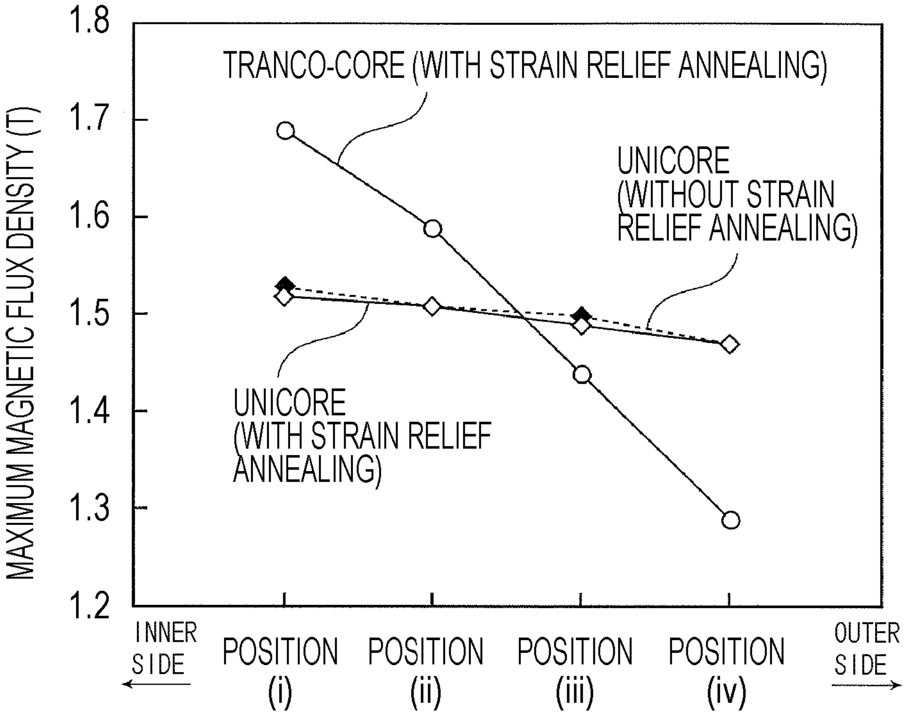
1.8
1.7
1.6
1.5
1.4
1.3
1.2
MAXIMUM MAGNETIC FLUX DENSITY (T)
TRANCO-CORE (WITH STRAIN RELIEF ANNEALING)
UNICORE
(WITHOUT STRAIN
RELIEF ANNEALING)
UNICORE
(WITH STRAIN RELIEF
ANNEALING)
INNER
SIDE
POSITION
(i)
POSITION
(ii)
POSITION
(iii)
POSITION
(iv)
OUTER
SIDE

FIG. 6

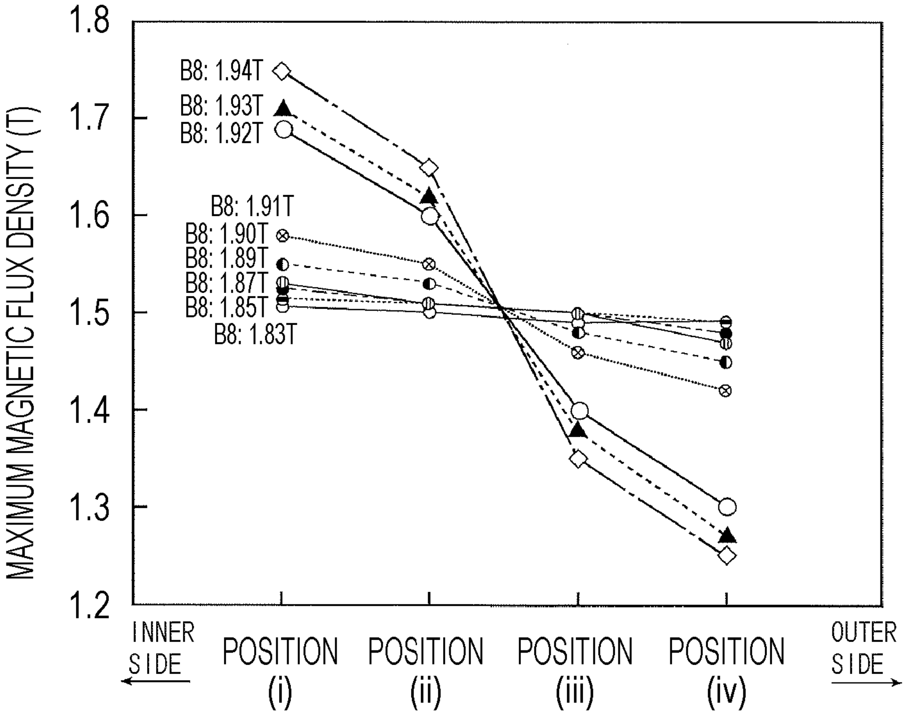
1.8
1.7
1.6
1.5
1.4
1.3
1.2
MAXIMUM MAGNETIC FLUX DENSITY (T)
B8: 1.94T
B8: 1.93T
B8: 1.92T
B8: 1.91T
B8: 1.90T
B8: 1.89T
B8: 1.87T
B8: 1.85T
B8: 1.83T
INNER
SIDE
POSITION
(i)
POSITION
(ii)
POSITION
(iii)
POSITION
(iv)
OUTER
SIDE

FIG. 7

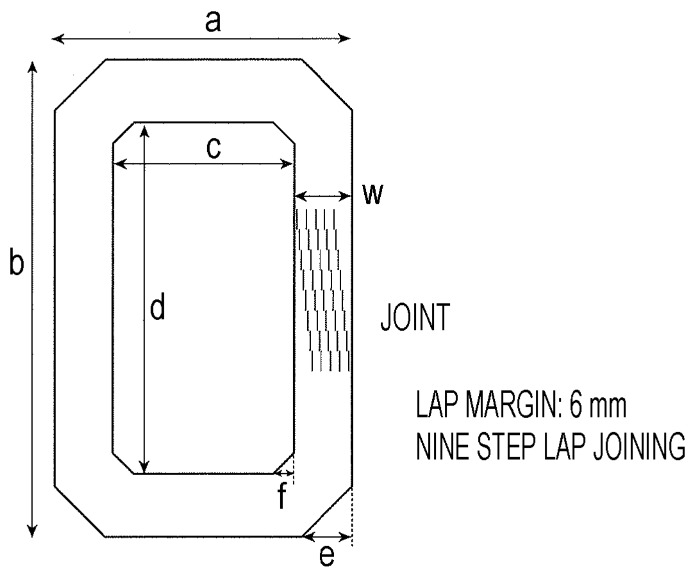
a
b
c
d
w
JOINT
LAP MARGIN: 6 mm
NINE STEP LAP JOINING
f
e

FIG. 8

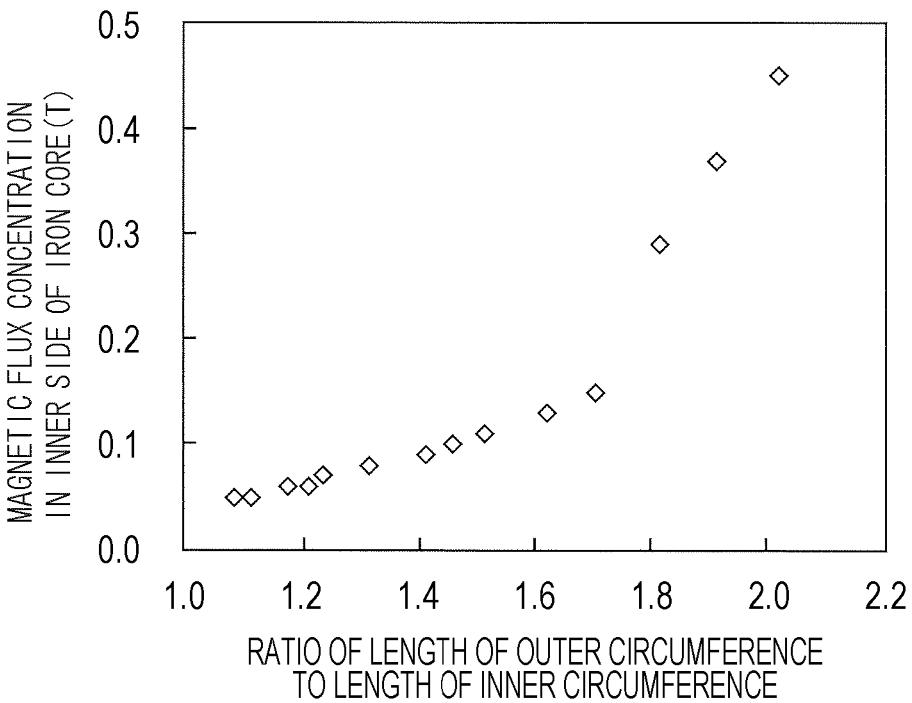
MAGNETIC FLUX CONCENTRATION IN INNER SIDE OF IRON CORE (T)
0.0
0.1
0.2
0.3
0.4
0.5
1.0
1.2
1.4
1.6
1.8
2.0
2.2
RATIO OF LENGTH OF OUTER CIRCUMFERENCE TO LENGTH OF INNER CIRCUMFERENCE

FIG. 9

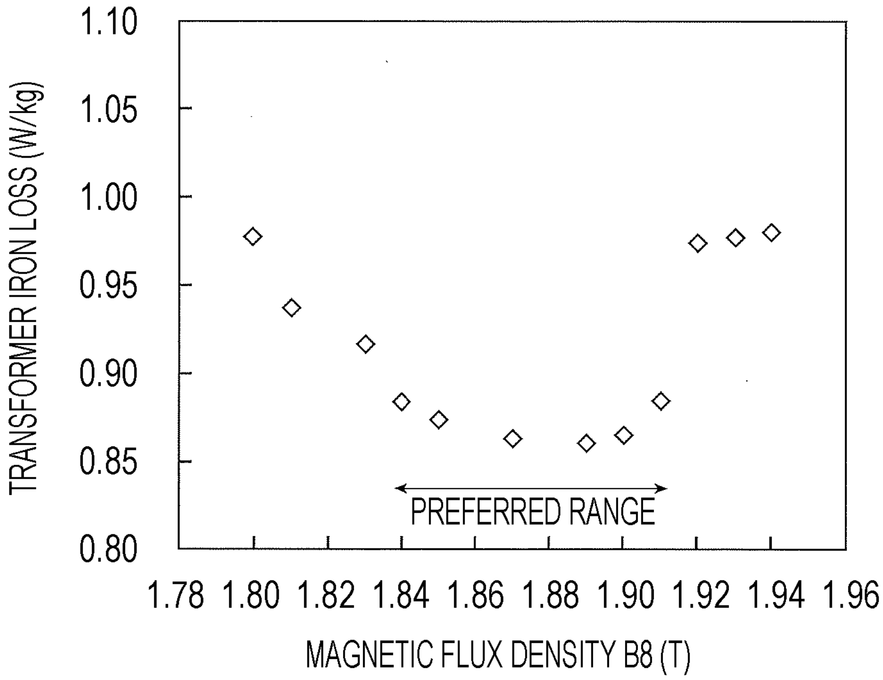
1.10
1.05
1.00
0.95
0.90
0.85
0.80
TRANSFORMER IRON LOSS (W/kg)
PREFERRED RANGE
1.78 1.80 1.82 1.84 1.86 1.88 1.90 1.92 1.94 1.96
MAGNETIC FLUX DENSITY B8 (T)

FIG. 10

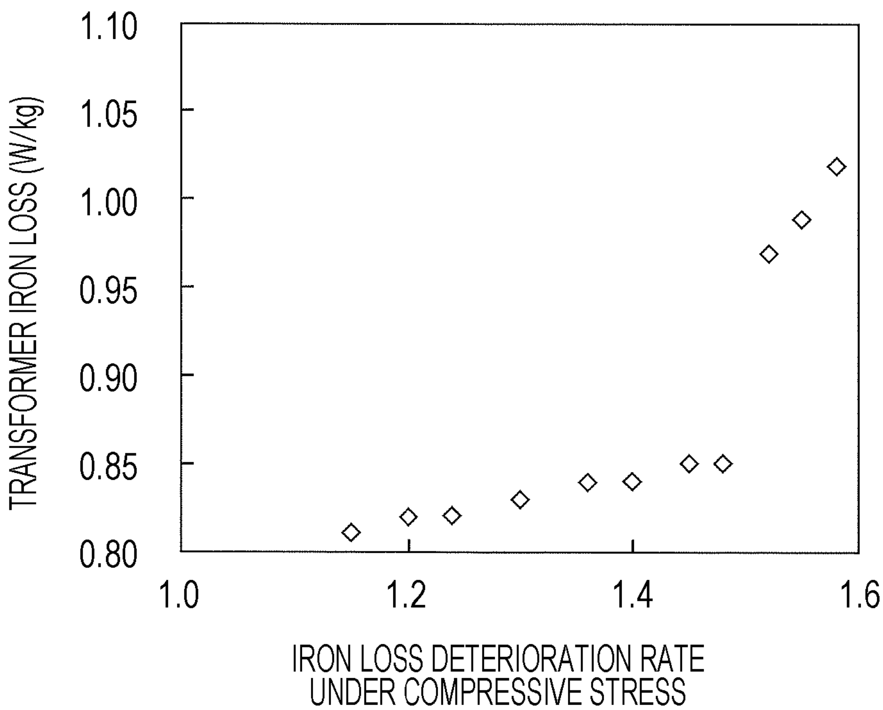
1.10
1.05
1.00
0.95
0.90
0.85
0.80
TRANSFORMER IRON LOSS (W/kg)
1.0
1.2
1.4
1.6
IRON LOSS DETERIORATION RATE
UNDER COMPRESSIVE STRESS

FIG. 11

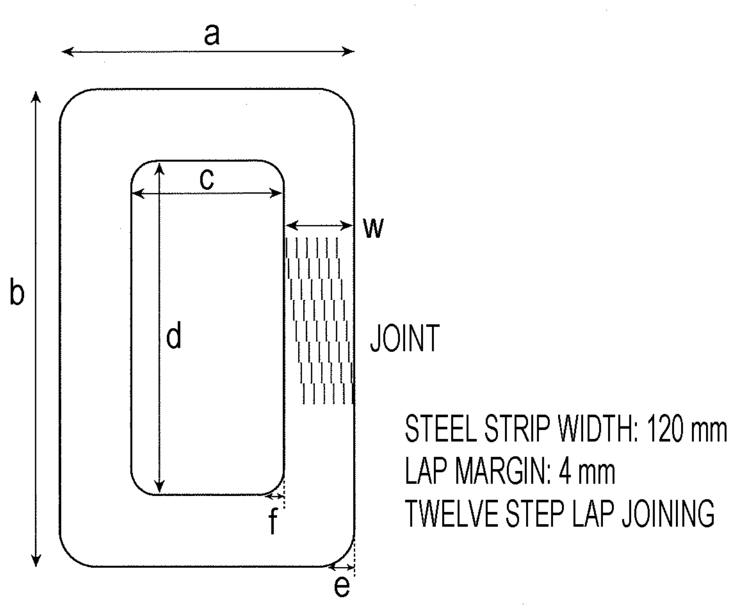
a
c
w
b
d
JOINT
STEEL STRIP WIDTH: 120 mm
LAP MARGIN: 4 mm
TWELVE STEP LAP JOINING
f
e

FIG. 12

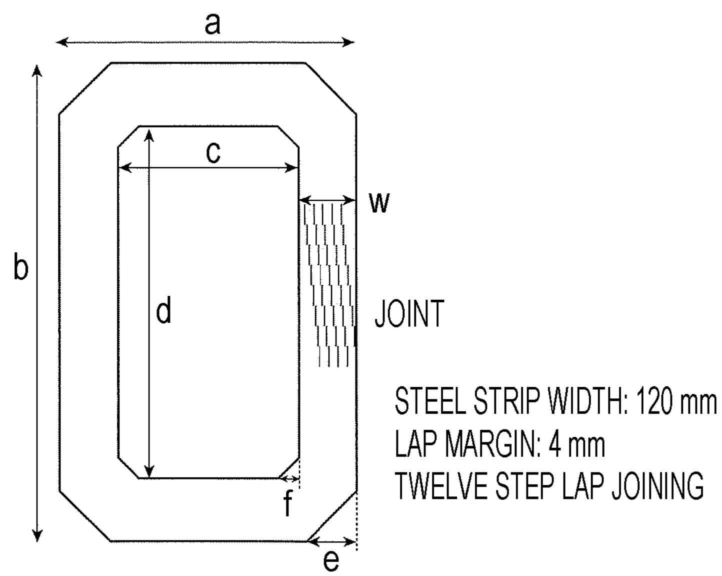
a
c
w
b
d
JOINT
STEEL STRIP WIDTH: 120 mm
LAP MARGIN: 4 mm
TWELVE STEP LAP JOINING
f
e

## INTERNATIONAL SEARCH REPORT

International application No.
**PCT/JP2022/023038**

### A. CLASSIFICATION OF SUBJECT MATTER

***C21D 8/12***(2006.01)i; ***C22C 38/00***(2006.01)i; ***C22C 38/60***(2006.01)i; ***H01F 41/02***(2006.01)i; ***H01F 27/245***(2006.01)i
FI: H01F27/245 155; H01F41/02 A; C21D8/12 D; C22C38/00 303U; C22C38/60

According to International Patent Classification (IPC) or to both national classification and IPC

### B. FIELDS SEARCHED

Minimum documentation searched (classification system followed by classification symbols)

H01F27/24; C21D8/12; C21D9/46; C22C5/00-25/00; C22C27/00-28/00; C22C30/00; C22C35/00-45/00; H01F41/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2019/009311 A1 (HITACHI METALS LTD) 10 January 2019 (2019-01-10) paragraphs [0006]-[0096], fig. 1-5 | 1-4 |
| A | JP 2020-150089 A (NIPPON STEEL CORP) 17 September 2020 (2020-09-17) paragraphs [0006]-[0064], fig. 1-12 | 1-4 |
| A | JP 2011-162829 A (JFE STEEL CORP) 25 August 2011 (2011-08-25) paragraphs [0008]-[0047], fig. 1-3 | 1-4 |
| A | JP 8-273918 A (KAWASAKI STEEL CORP) 18 October 1996 (1996-10-18) paragraphs [0007]-[0024], fig. 1-6 | 1-4 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 June 2022** | **12 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2022/023038**

| Patent document cited in search report | Publication date (day/month/year) | Patent family member(s) | Publication date (day/month/year) |
|---|---|---|---|
| WO 2019/009311 A1 | 10 January 2019 | (Family: none) | |
| JP 2020-150089 A | 17 September 2020 | (Family: none) | |
| JP 2011-162829 A | 25 August 2011 | (Family: none) | |
| JP 8-273918 A | 18 October 1996 | US 5658397 A<br>column 1, line 65 to column 6, line 63, fig. 1-6 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 62053579 B
- JP 2895670 B
- JP 5286292 B
- JP 2006185999 A